# EUROPÄISCHE PATENTANMELDUNG

(11) **EP 3 854 927 A1**
(43) Veröffentlichungstag der Anmeldung: **28.07.2021**
(21) Anmeldenummer: 21150487.3
(22) Anmeldetag: 07.01.2021
(51) Int. Cl.: D06F 34/26, D06F 58/48, D06F 103/32, D06F 105/20, D06F 105/28, D06F 105/32, D06F 58/20

(54) **WÄSCHETROCKNER**

(30) Priorität: 23.01.2020 DE 102020101597
(71) Anmelder: Miele & Cie. KG, 33332 Gütersloh (DE)
(72) Erfinder: Sladek, Kamil P, 30167 Hannover (DE); Hansen, Ole, 31515 Wunstorf (DE)

(57) **Zusammenfassung**

Die Erfindung betrifft einen Wäschetrockner (0) mit einem Gebläse (4), welches ausgebildet ist, einen Prozessluftstrom (A) innerhalb eines Luftkanals (1) zu erzeugen, und mit einem Mischluftelement (5), welches ausgebildet ist, den Prozessluftstrom (A) von dem Gebläse (4) zu erhalten und in einen Umluftstrom und in einen Abluftstrom (B) zu teilen, den Abluftstrom (B) mittels eines Abluftpfads (6) an die Umgebung abzuführen und dem Umluftstrom einen Zuluftstrom (C) mittels eines Zuluftpfads (7) aus der Umgebung zuzuführen, wobei das Mischluftelement (5) ferner ausgebildet ist, das Verhältnis von Umluftstrom zu Abluftstrom (B) zu variieren. Der Wäschetrockner (0) ist gekennzeichnet durch ein Regelungselement (8), welches ausgebildet ist, das Verhältnis von Umluftstrom zu Abluftstrom (B) mittels des Mischluftelements (5), vorzugsweise ausschließlich, in Abhängigkeit einer Soll-Temperatur des Prozessluftstroms (A) zu regeln.

## Beschreibung

Die Erfindung betrifft einen Wäschetrockner, nach dem Oberbegriff das Patentanspruchs 1, ein Regelungselement zur Verwendung in einem derartigen Wäschetrockner nach dem Patentanspruch 14 sowie ein Verfahren zum Betrieb eines derartigen Wäschetrockners nach dem Patentanspruch 15.

Zur Trocknung von Wäsche werden heutzutage Wäschetrockner und teilweise auch Waschtrockner eingesetzt, welche die Wäsche sowohl waschen als auch trocknen können. Bei gewerblicher Nutzung werden eher Wäschetrockner verwendet.

In jedem Fall wird üblicherweise ein Prozessluftkreislauf angewendet, bei dem durch ein Heizelement aufgeheizte Prozessluft über ein Gebläse, d.h. ein Prozessluftgebläse, durch einen Luftzuführungskanal in eine Wäschetrommel des Wäschetrockners bzw. des Waschtrockners geführt wird. Bei gewerblichen Wäschetrocknern erfolgt der Betrieb der Heizvorrichtung üblicherweise mit Gas, mit Heizwasser oder auch elektrisch. In der Wäschetrommel, kurz auch Trommel genannt, wird die zu trocknende Wäsche mittels eines Trommelantriebs üblicherweise durch Rotation bewegt, damit die Prozessluft die Wäsche möglichst vollständig und gleichmäßig erreichen kann. Die Prozessluft nimmt hierbei Feuchtigkeit aus der Wäsche auf und trocknet diese dadurch. Die feuchte Prozessluft wird dann über einen Luftrückführungskanal von der Wäschetrommel weggeführt.

Bei gewerblichen Wäschetrocknern ist es dabei üblich, die feuchte Prozessluft von dem Luftrückführungskanal als Abluft aus dem Wäschetrockner vollständig in die Umgebung und insbesondere über einen Abluftkanal oder Abluftschlauch nach außerhalb eines Gebäudes, d.h. ins Freie, abzuführen und so die Feuchtigkeit aus der Wäsche sowie aus dem Wäschetrockner zu entfernen. Derartige Wäschetrockner bzw. Trockner werden auch als Ablufttrockner bezeichnet. Dies führt jedoch zu entsprechend hohen Verlusten der zuvor erzeugten Wärme, welche mit der Abluft aus dem Wäschetrockner abgeführt wird. Entsprechend wird die zu erwärmende Prozessluft aus der Umgebung als Umgebungsluft, als Frischluft bzw. als Zuluft angesogen und muss vollständig erwärmt werden, um den Trocknungsvorgang innerhalb der Wäschetrommel wie zuvor beschrieben bewirken zu können. Dies führt zu einem entsprechend hohen Verbrauch an Energie zur Erwärmung der Umgebungsluft als Prozessluft.

Zur Verbesserung der Energieeffizienz ist es daher bekannt, einen Teil der warmen feuchten Abluft als Umluft im Wäschetrockner zu halten und die Umluft gemeinsam mit einer entsprechend reduzierten Menge an Zuluft als Prozessluft über den Luftzuführungskanal wieder in die Wäschetrommel zu führen. Aufgrund der höheren Temperatur der Prozessluft kann die gewünschte Temperatur der Prozessluft in der Trommel schneller und mit weniger Energie erreicht werden.

Dies wird beispielsweise seitens der Miele & Cie. KG unter der Bezeichnung "Air-Recycling" bei gewerblichen Wäschetrocknern angewendet. Dabei wird eine starre Lufttrennung durch eine entsprechende konstruktive Gestaltung des Luftkanals vorgesehen, so dass ein konstanter Abluftanteil der Prozessluft aus dem Wäschetrockner abgeführt sowie ein konstanter Umluftanteil der Prozessluft mit einem konstanten Zuluftanteil zur Prozessluft vermischt wird, welche dann zu erwärmen ist. Zur Aufteilung des Prozessluftstroms aus der Wäschetrommel in Abluft und Umluft können starr angeordnete Abluft-Umluft-Trennbleche eingesetzt werden, welche auch als Leitbleche bezeichnet werden können, siehe z.B. EP 1 682 715 B1. Derartige Leitbleche sind üblicherweise annähernd parallel zur Strömungsrichtung des Prozessluftstroms angeordnet. Die Leitbleche bilden die Basis für die grundsätzliche Anordnung der Trennung der Luftpfade. Dabei findet die Trennung des vom Gebläse aus dem Luftrückführungskanal geförderten Prozessluftstroms in den Abluftanteil bzw. in den Abluftstrom und in den Umluftanteil bzw. in den Umluftstrom, wie bereits erwähnt, unmittelbar am Austritt des Gehäuses des Gebläserads, d.h. hinter der Leitspirale des Gebläserads, statt.

Mit anderen Worten wird lediglich ein Teil der Prozessluft nach dem Verlassen der Trommel als Abluft aus dem Trockner an die Umgebung abgeführt während der übrige Teil der Prozessluft als Umluft erwärmt und anschließend wieder in die Trommel eingeleitet wird. Dabei wird die Umluft mit zusätzlicher Zuluft aus der Umgebung des Trockners aufgefüllt, um den Verlust der abgeführten Abluft im Prozessluftstrom wieder auszugleichen.

Als Weiterentwicklung dieser Technik ist es ebenfalls seitens der Miele & Cie. KG unter der Bezeichnung "Air-Recycling Plus" bekannt, im Umluftpfad des Luftkanals eine Klappe anzuordnen, welche in zwei Zuständen steuerbar ausgebildet ist, nämlich offen oder ganz geschlossen (siehe DE 103 49 712 B4 oder EP 1 682 715 B1). Dies kann in Abhängigkeit des sensorisch erfassten Drucks des Prozessluftstroms im Luftzuführungskanal auf dem Weg in die Wäschetrommel erfolgen.

Dabei wird bei dem Trockner mit der Bezeichnung "Air-Recycling Plus" prozesstechnisch der Umluftpfad des Luftkanals durch die o.g. genannte Klappe dann verschlossen, wenn die Wäsche den gewünschten Trocknungsgrad erreicht hat. Hierdurch wird gleichzeitig ausschließlich Zuluft als Prozessluft verwendet und der Trommel zugeführt. Diese Umschaltung ist statisch an den Programmschritt der Abkühlphase im Trocknungsprogramm gekoppelt. Dadurch wird während der Abkühlphase des Trockners ein maximaler Volumenstrom der Abluft und damit auch ein maximaler Volumenstrom der Zuluft als Prozessluft realisiert, wodurch der Trockner schneller abkühlt. Dies hat gegenüber dem Trockner mit der Bezeichnung "Air Recycling" den Vorteil einer schnelleren Abkühlphase und somit einer kürzeren Gesamtlaufzeit.

Der Erfindung stellt sich das Problem, einen Wäschetrockner der eingangs beschriebenen Art mit verbesserter Energieeffizienz zu schaffen. Dies soll insbesondere möglichst einfach bzw. kostengünstig erfolgen. Zumindest soll eine Alternative zu bekannten derartigen Wäschetrocknern bereitgestellt werden.

Erfindungsgemäß wird dieses Problem durch einen Wäschetrockner mit den Merkmalen des Patentanspruchs 1, durch ein Regelungselement mit den Merkmalen das Patentanspruch 14 sowie durch ein Verfahren mit den Merkmalen des Patentanspruchs 15 gelöst. Vorteilhafte Ausgestaltungen und Weiterbildungen der Erfindung ergeben sich aus den nachfolgenden Unteransprüchen.

Somit betrifft die Erfindung einen Wäschetrockner, mit einem Gebläse, welches ausgebildet ist, einen Prozessluftstrom innerhalb eines Luftkanals zu erzeugen, und mit einem Mischluftelement, welches ausgebildet ist, den Prozessluftstrom von dem Gebläse zu erhalten und in einen Umluftstrom und in einen Abluftstrom zu teilen, den Abluftstrom mittels eines Abluftpfads an die Umgebung abzuführen und dem Umluftstrom einen Zuluftstrom mittels eines Zuluftpfads aus der Umgebung zuzuführen, wobei das Mischluftelement ferner ausgebildet ist, das Verhältnis von Umluftstrom zu Abluftstrom zu variieren.

Der Wäschetrockner ist gekennzeichnet durch ein Regelungselement, welches ausgebildet ist, das Verhältnis von Umluftstrom zu Abluftstrom mittels des Mischluftelements, vorzugsweise ausschließlich, in Abhängigkeit einer Soll-Temperatur des Prozessluftstroms zu regeln. Die Variation des Verhältnisses von Umluftstrom zu Abluftstrom kann vorzugsweise stufenlos bzw. in einer Vielzahl von diskreten Stufen variiert werden. Die Umsetzung der Erfindung kann insbesondere bei einem Trockner vorteilhaft sein, da die entsprechenden Eigenschaften und Vorteile dort besonders wirkungsvoll genutzt werden können, wie weiter unten näher beschrieben werden wird.

Mit anderen Worten erreicht die Prozessluft bzw. der Prozessluftstrom das Mischluftelement, welches vorzugsweise im Verlauf des Luftkanals unmittelbar hinter dem Gebläse angeordnet ist. Seitens des Mischluftelements kann ein Anteil der Prozessluft bzw. des Prozessluftstroms als Abluft bzw. als Abluftstrom nach außen, d.h. aus dem Wäschetrockner hinaus, abgeführt werden, so dass parallel hierzu die Umluft bzw. der Umluftstrom weiterströmen kann. Der Umluft bzw. Umluftstrom und ein Umgebungs-, Zuluft- oder Frischluftstrom werden mittels des Mischelements zusammengeführt, wobei die Menge des Zuluftstroms bzw. Umgebungs-, Zuluft- oder Frischluftstroms der Menge des Abluftstroms entspricht. Entsprechend kann der Umluftstrom wieder zu dem Prozessluftstrom aufgefüllt werden. Das Maß, wieviel Abluft dem Prozessluftstrom seitens des Mischluftelements entnommen und gleichzeitig als Zuluft dem Umluftstrom wieder zugeführt wird, kann seitens des Mischluftelements z.B. durch die Stellung eines verstellbaren Elements des Mischluftelements wie z.B. eines Regulierungselements wie z.B. einer Klappe vorgegeben werden. Diese Stellung eines verstellbaren Elements des Mischluftelements kann seitens des Regelungselements in Abhängigkeit einer Soll-Temperatur des Umluftstroms geregelt bzw. eingestellt werden.

Mit anderen Worten kann das Regelungselement die Differenz aus sensorisch erfasster Ist-Temperatur des Prozessluftstroms und vorbestimmter Soll-Temperatur des Prozessluftstroms bestimmen und hierauf regeln, was vorzugsweise mittels eines PI-Reglers oder eines PID-Reglers vorgenommen werden kann, wie weiter unten noch näher beschrieben werden wird. Das Regelungselement kann als Hardware, als Software oder auch kombiniert aus Hard- und Software umgesetzt sein. Der entsprechende Wert der Ist-Temperatur des Prozessluftstroms kann an einer geeigneten Stelle im Prozessluftkreislauf sensorisch erfasst werden, wie weiter unten noch näher beschrieben werden wird.

Das Ergebnis dieser Regelung kann in jedem Fall ein Stellwert einer Stellgröße sein, welche die Stellung eines verstellbaren Elements des Mischluftelements wie z.B. eines Regulierungselements wie z.B. einer Klappe derart verstellen kann, dass dem dort von dem Gebläse eintreffenden Prozessluftstrom ein entsprechender Anteil als Abluft entnommen und nach außerhalb des Haushaltgeräts abgeführt werden kann. Dies kann gleichzeitig dazu führen, dass ein entsprechender Zuluftanteil in den Wäschetrockner eingesogen und dem Umluftstrom zugeführt wird, um diese wieder zu dem Prozessluftstrom aufzufüllen.

Der Erfindung liegt dabei die Erkenntnis zugrunde, dass es bei einem fest vorgegebenen Umluftanteil nachteilig sein kann, dass es zu einer Überhöhung der Prozesstemperatur, d.h. zu einer höheren Ist-Temperatur der Prozessluft als zulässig, kommen kann, woraufhin die Steuerung des Wäschetrockners üblicherweise mit einer temporären Abschaltung der Heizung reagiert. Die Ist-Temperatur der Prozessluft ergibt sich üblicherweise aus mehreren konstanten Größen wie z.B. der Gebläsedrehzahl und der Heizleistung sowie aus veränderlichen Größen wie der Beladungsmenge z.B. der Trommel, der Ist-Temperatur der Zuluft und dem Gegendruck in der Abluftleitung, über welche die Abluft aus dem Wäschetrockner bzw. aus einem Gebäude abgeführt werden kann. Die resultierende Ist-Temperatur der Prozessluft kann dadurch ohne weiteres höher als die im Wäschetrockner zulässige Temperatur ausfallen, was zu der o.g. Abschaltung führen kann. Diese Abschaltung kann zu einer Verlängerung der Trocknungszeit führen. Auch können derartige Heizunterbrechungen die Heizungsschütze belasten und hierdurch deren Lebensdauer reduzieren.

Daher kann erfindungsgemäß eine Soll-Prozesstemperatur, d.h. eine Soll-Temperatur des Prozessluftstroms, z.B. seitens eines Trocknungsprogramms als Prozess vorgegeben werden. Hierdurch kann für der Wäschetrockner die Möglichkeit geschaffen werden, die Ist-Prozesstemperatur auf dem Wert der Soll-Prozesstemperatur und insbesondere konstant zu halten, indem das Regelungselement das Verhältnis von Abluft zu Umluft und damit auch das Verhältnis von Zuluft zu Umluft über die entsprechende Einstellung des Mischluftelements bzw. dessen Regulierungselement wie z.B. einer Klappe dynamisch anpasst. Dadurch können Heizunterbrechungen vermieden und die Trocknungszeit somit nicht unnötig verlängert werden. Gleichzeitig können dadurch die Schaltzyklen der Heizungsschütze reduziert werden, woraus eine Verlängerung der Lebensdauer der Heizungsschütze resultieren kann.

Das Regelungselement kann daher auch auf Temperaturgrenzwerte reagieren, indem das Regelungselement bei drohender Überschreitung einer maximal zulässigen Ist-Temperatur der Prozessluft das Mischluftelement zugunsten eines geringeren Umluftanteils einstellt. Dadurch ergibt sich zwangsläufig ein höherer Zuluftanteil, wodurch vermehrt warme Luft als Abluft aus dem Wäschetrockner austreten und raumtemperierte und damit üblicherweise kühlere Zuluft in den Wäschetrockner einströmen kann. Die Ist-Temperatur der Prozessluft und damit indirekt auch der damit in Kontakt stehenden Komponenten wie z.B. eine zu trocknende Wäsche kann folglich alleinig durch einen veränderlichen Umluftanteil und insbesondere ohne Veränderung der Heizleistung, wie weiter unten noch näher beschrieben werden wird, in bestimmten Grenzen geregelt und insbesondere konstant gehalten werden. Hierdurch kann der Trockenprozess weniger abhängig von der jeweiligen Umgebungstemperatur des Wäschetrockners durchgeführt werden und niedrige Ist-Temperaturen der Zuluft können durch einen höheren Umluftanteil kompensiert werden, hohe Ist-Temperaturen der Zuluft dagegen durch einen höheren Frischluftanteil. Dies kann insbesondere bei gleichbleibender Heizleistung zugunsten einer definierten Ist-Temperatur der Prozessluft erfolgen.

Vorteilhaft ist hierbei insbesondere, dass durch die erfindungsgemäße Regelung des Verhältnisses von Umluftstrom zu Abluftstrom mittels des Mischluftelements in Abhängigkeit einer Soll-Temperatur des Prozessluftstroms mehrere Potentiale eines frei verstellbaren Regulierungselements des Mischluftelements z.B. in Form einer Umluftklappe genutzt werden können. Insbesondere kann dadurch eine Verkürzung der reinen Trocknungszeit sowie eine Einsparung von Heizenergie gegenüber den bekannten derartigen Wäschetrocknern erfolgen, welche keine frei verstellbare Umluftklappe aufweisen.

Die Regelung kann die Einhaltung einer optimalen Ist-Prozesstemperatur bei unterschiedlichen Umgebungsbedingungen ermöglichen. Die Umgebung kann sich beispielsweise durch eine variable Ist-Temperatur der Zuluft sowie durch verschieden lange Abluftleitungen mit unterschiedlichen Strömungswiderständen auf die Ist-Prozesstemperatur auswirken. Im Gegensatz zu den bekannten derartigen Wäschetrocknern kann es mit der erfindungsgemäßen dynamischen Umluftregelung ermöglicht werden, die Ist-Prozesstemperatur in gewissen Grenzen zu kontrollieren, insbesondere bewusst zu variieren. Dies kann insbesondere umgesetzt werden, ohne die Heizleistung und bzw. oder die Gebläseleistung verändern zu müssen, wie weiter unten noch näher beschrieben werden wird. Dadurch ergibt sich ein weiterer, bisher nicht verfügbarer Freiheitsgrad, insbesondere für die Anwendungstechnik.

Dabei vorzugsweise das Verhältnis von Umluftstrom zu Abluftstrom mittels des Mischluftelements ausschließlich in Abhängigkeit einer Soll-Temperatur des Prozessluftstroms zu regeln kann dahingehend vorteilhaft sein, dass dies die Regelung vereinfachen und dennoch die zuvor beschriebenen Eigenschaften und Vorteile bewirken kann.

Gemäß einem Aspekt der Erfindung ist das Regelungselement ausgebildet, das Verhältnis von Umluftstrom zu Abluftstrom mittels des Mischluftelements, vorzugsweise ausschließlich, in Abhängigkeit eines Soll-Temperaturverlaufs des Prozessluftstroms über die Zeit eines Prozesses zu regeln. Auf diese Art und Weise können die zuvor beschriebenen Eigenschaften und Vorteile zur Durchführung eines Prozesses wie z.B. eines Trocknungsprozesses angewendet und hierzu genutzt werden.

Gemäß einem weiteren Aspekt der Erfindung ist der Wäschetrockner, vorzugsweise das Regelungselement, ausgebildet, das Gebläse mit konstanter Gebläseleistung, vorzugsweise mit maximaler Gebläseleistung, zu betreiben. Mit anderen Worten kann aufgrund der zuvor beschriebenen Regulierung der Ist-Temperatur des Prozessluftstroms durch die Variation von Abluft- bzw. Zuluftanteil zum Umluftanteil seitens des Gebläses auf eine Anpassung bzw. Regelung verzichtet werden. Dies kann die Einstellung bzw. Steuerung des Gebläses vereinfachen und hierdurch die entsprechenden Kosten gering halten. Ggfs. können aufgrund der Einfachheit der Steuerung des Gebläses auch Gewicht und bzw. oder Bauraum im Wäschetrockner gespart werden.

Gemäß einem weiteren Aspekt der Erfindung weist der Wäschetrockner ein Heizelement auf, welches ausgebildet und angeordnet ist, den Prozessluftstrom zu erwärmen, wobei der Wäschetrockner, vorzugsweise das Regelungselement, ausgebildet ist, das Heizelement mit konstanter Heizleistung, vorzugsweise mit maximaler Heizleistung, zu betreiben. Mit anderen Worten kann auch seitens des Heizelements aufgrund der zuvor beschriebenen Regulierung der Ist-Temperatur des Prozessluftstroms durch die Variation von Abluft- bzw. Zuluftanteil zum Umluftanteil auf eine Anpassung bzw. Regelung verzichtet werden. Dies kann die Einstellung bzw. Steuerung des Heizelements vereinfachen und hierdurch die entsprechenden Kosten gering halten. Ggfs. können aufgrund der Einfachheit der Steuerung des Heizelements auch Gewicht und bzw. oder Bauraum im Wäschetrockner gespart werden.

Dabei das Heizelement mit der maximalen Heizleistung zu betreiben kann es ermöglichen, dass Heizelement entsprechend auszulegen und auszunutzen, was eine Überdimensionierung des Heizelements vermeiden kann. Auch dies kann Kosten, Gewicht und bzw. oder Bauraum seitens des Heizelements einsparen.

Gemäß einem weiteren Aspekt der Erfindung ist das Regelungselement ausgebildet, das Mischluftelement derart zu regeln, dass im Laufe eines Prozesses stets ein Abluftstrom erzeugt wird. Beispielsweise kann der Anteil der Prozessluft, welcher als Abluft seitens des Mischluftelements abgeführt werden kann, mindestens 5% betragen, so dass der Umluftstrom 95% des Prozessluftstroms beträgt. Hierzu kann dem Stellwert der Stellgröße, welche der Stellung eines verstellbaren Elements des Mischluftelements wie z.B. eines Regulierungselements wie z.B. einer Klappe entsprechen bzw. diese bewirken kann, ein oberer oder unteren Grenzwert vorgegeben werden. Durch diesen minimalen oder maximalen Stellwert kann sichergestellt werden, dass stets ein Abluftstrom vorliegt, unabhängig von dem Stellwert der Stellgröße, welche von dem Regelungselement erzeugt wird.

Einen derartigen Mindest-Abluftvolumenstrom einzustellen kann vorteilhaft sein, damit die Abluft sicher aus dem Wäschetrockner und z.B. durch eine Abluftleitung hindurch gefördert werden kann. Indem der Abluftanteil geregelt wird, kann ein höherer Strömungswiderstand in der Abluftleitung und somit auch eine längere Abluftleitung am Ort der Anwendung zugelassen werden. Das erfindungsgemäße Regelungselement kann den Abluftanteil abhängig vom Temperaturverhalten des Wäschetrockners variieren, wie zuvor beschrieben. Sollte es z.B. einen vergleichsweise hohen Strömungswiderstand in der Abluftleitung geben, dann ist davon auszugehen, dass der Wäschetrockner seine Abluft und somit auch die Wärme schlechter abführen kann. Die erfindungsgemäße dynamische Regelung kann auf den resultierenden, schnelleren Anstieg der Ist-Temperatur der Prozessluft selbsttätig mit der Einstellung eines vergleichsweise höheren Abluftanteils reagieren, damit es nicht zum Überschreiten der Soll-Temperatur der Prozessluft kommt. Damit kann dem höheren Strömungswiderstand in der Abluftleitung mit einem höheren Luftdruck der Abluft begegnet werden, welchen der Wäschetrockner durch einen höheren Abluftanteil erzeugen kann.

Gemäß einem weiteren Aspekt der Erfindung ist das Regelungselement ausgebildet, das Mischluftelement derart zu regeln, dass zu Beginn eines Prozesses ein minimaler Anteil des Abluftstroms von 1% bis 15%, vorzugsweise von 5% bis 15%, gegenüber dem Anteil des Umluftstroms erzeugt wird. Mit anderen Worten werden 1% bis 15%, vorzugweise 5% bis 15%, des Prozessluftstroms als Abluft abgeführt und 99% bis 85%, vorzugsweise 95% bis 85%, des Prozessluftstroms als Umluftstrom weitergeleitet, um entsprechend mit 1% bis 15%, vorzugweise 5% bis 15%, Zuluft wieder ergänzt zu werden.

Diesem Aspekt der Erfindung liegt dabei die Erkenntnis zugrunde, dass zu Beginn eines Prozesses wie z.B. eines Trocknungsprozesses der Anteil der Umluft möglichst groß sein sollte, um die Prozessluft möglichst schnell und mit möglichst wenig Energie auf die gewünschte Soll-Temperatur zu erwärmen. Gleichzeitig sollte der Anteil der Abluft möglichst gering gehalten werden, um möglichst wenig Wärme aus dem Wäschetrockner entweichen zu lassen bzw. abzuführen. Dies kann den Trocknungsprozess beschleunigen und gleichzeitig die Energieeffizienz des Trocknungsprozesses erhöhen.

Mit anderen Worten kann die Regelung derart gestaltet sein, dass das Regelungselement zu Beginn des Trockenprozesses einen maximalen Umluftanteil bzw. einen reinen Umluftprozess durch entsprechende Verstellung des Mischluftelements einstellt. Bei aktiviertem Heizelement kann diese Einstellung zur Folge haben, dass bereits erwärmte Prozessluft teilweise bis vollständig erneut durch das Heizelement erwärmt wird, wodurch sich die Prozessluft weiter aufwärmen kann. Im Gegensatz zu einem reinen Abluftbetrieb kann dadurch der Wärmestrom aus dem Wäschetrockner in die Umgebung reduziert und der Anstieg der Ist-Temperatur der Prozessluft beschleunigt werden. Demzufolge kann sich mit der Erhöhung des Umluftanteils bzw. mit der Reduzierung des Abluftanteils die Aufheizzeit der Prozessluft bzw. des ganzen Systems inkl. z.B. Wäsche bei gleicher Heizleistung verkürzen.

Gemäß einem weiteren Aspekt der Erfindung ist das Regelungselement ausgebildet, das Mischluftelement derart zu regeln, dass im Laufe eines Prozesses der Anteil des Abluftstroms gegenüber dem Anteil des Umluftstroms konstant gehalten oder stetig erhöht wird. Hierdurch kann erreicht werden, dass mit zunehmender Feuchtigkeit der Prozessluft, welche durch den Trocknungsprozess aufgenommen werden kann, auch zunehmend Feuchtigkeit mittels der Abluft aus dem Wäschetrockner abgeführt werden kann.

Gemäß einem weiteren Aspekt der Erfindung ist das Regelungselement ausgebildet, das Mischluftelement derart zu regeln, dass am Ende eines Prozesses ein maximaler Anteil des Abluftstroms von 85% bis 100% gegenüber dem Anteil des Umluftstroms erzeugt wird. Dies kann die Abfuhr von Wärme aus dem Wäschetrockner begünstigen und damit die Abkühlung des Wäschetrockners zum Ende des Prozesses bzw. Trocknungsprozesses beschleunigen. Dies kann auch den Prozess insgesamt verkürzen.

Gemäß einem weiteren Aspekt der Erfindung ist der Wäschetrockner, vorzugsweise das Regelungselement, ausgebildet, am Ende eines Prozesses ein Heizelement des Prozessluftstroms in der Heizleistung zu reduzieren oder auszuschalten. Hierdurch kann der Verbrauch von Energie reduziert bzw. vermieden werden, wenn keine weitere Erwärmung der Prozessluft mehr erforderlich ist bzw. die aktuelle Menge an Wärme in der Prozessluft für die weitere Durchführung des Prozesses ausreichend sein kann.

Gemäß einem weiteren Aspekt der Erfindung ist das Regelungselement ausgebildet, das Mischluftelement auf die maximal zulässige Temperatur eines Prozesses und bzw. oder auf die maximal zulässige Temperatur eines Heizelements des Prozessluftstroms als Soll-Temperatur zu regeln. Dies kann es ermöglichen, wie bereits zuvor beschrieben, das Heizelement entsprechend auszulegen und dessen Heizleistung vollständig auszuschöpfen. Die Regelung auf die maximal zulässige Temperatur eines Prozesses kann es zusätzlich oder alternativ ermöglichen, den Prozess zu beschleunigen und damit den Prozess zeitlich zu verkürzen.

Mit anderen Worten kann eine definierte Prozesstemperatur insbesondere die mit dem System und z.B. der Wäsche verträgliche Maximaltemperatur sein, bei der sich unter den gegebenen Bedingungen die maximale Verdunstungsrate des in der Wäsche befindlichen Wassers einstellt. Somit kann, insbesondere bei einer konstanten Heizleistung, der kürzest mögliche Trocknungsverlauf realisiert werden, indem der Umluftanteil temperaturabhängig geregelt wird.

Gemäß einem weiteren Aspekt der Erfindung weist das Regelungselement einen PI-Regler, vorzugsweise einen PID-Regler, auf. Hierunter ist ein proportional-integral controller bzw. ein proportional-integral-derivative controller zu verstehen, welcher aus Anteilen eines P-Gliedes und eines I-Gliedes, vorzugsweise ferner aus Anteilen eines D-Gliedes, besteht. Dies kann eine einfache aber wirkungsvolle Umsetzung eines Reglers des Regelungselements ermöglichen, dessen Eigenschaften durch eine entsprechende Parametrierung beeinflusst werden können. Die Parametrierung kann vorzugsweise derart vorgenommen werden, dass ein Überschwingen der Soll-Temperatur der Prozessluft vermieden und damit die Soll-Temperatur der Prozessluft sicher eingehalten werden kann.

Gemäß einem weiteren Aspekt der Erfindung weist der Wäschetrockner einen Temperatursensor auf, welcher ausgebildet und angeordnet ist, die Ist-Temperatur des Prozessluftstroms zu erfassen. Hierdurch kann dem Regelungselement die Ist-Temperatur des Prozessluftstroms als Ist-Größe zur Verfügung gestellt werden.

Gemäß einem weiteren Aspekt der Erfindung ist der Temperatursensor in einem Luftzuführungskanal hinter einem Heizelement oder in einer Trommel angeordnet. Auf diese Art und Weise kann die Ist-Temperatur des Prozessluftstroms an Stellen des Prozessluftkreislaufs erfasst werden, wo hinter dem Heizelement die Ist-Temperatur des Prozessluftstroms am größten oder in der Trommel eines Trockners am relevantesten sein kann, um die Ist-Temperatur des Prozessluftstroms auf die maximal zulässige Soll-Temperatur des Trocknungsprozesses zur regeln und so z.B. eine Schädigung der zu trocknenden Wäsche zu vermeiden.

Die vorliegende Erfindung betrifft auch ein Regelungselement zur Verwendung in einem Wäschetrockner wie zuvor beschrieben, welches ausgebildet ist, das Verhältnis von Umluftstrom zu Abluftstrom mittels des Mischluftelements, vorzugsweise ausschließlich, in Abhängigkeit einer Soll-Temperatur des Prozessluftstroms zu regeln. Hierdurch kann ein Regelungselement als Hardware, als Software oder als Kombination aus Hard- und Software zur Verfügung gestellt werden, um die zuvor beschrieben Eigenschaften und Vorteile zu realisieren und bei einem erfindungsgemäßen Wäschetrockner nutzen zu können.

Die vorliegende Erfindung betrifft auch Verfahren zum Betrieb eines Wäschetrockners, vorzugsweise eines Trockners, wie zuvor beschrieben mit wenigstens den Schritten:
- Erhalten einer Soll-Temperatur des Prozessluftstroms,
- Erfassen einer Ist-Temperatur des Prozessluftstroms, und
- Bestimmen eines Stellwerts des Verhältnisses von Umluftstrom zu Abluftstrom basierend auf der Soll-Temperatur und der Ist-Temperatur des Prozessluftstroms, und
- Betreiben des Mischluftelements basierend auf dem Stellwert.

Hierdurch wird ein Verfahren zur Verfügung gestellt, um die zuvor beschrieben Eigenschaften und Vorteile eines erfindungsgemäßen Wäschetrockners umsetzen und nutzen zu können.

Ein Ausführungsbeispiel der Erfindung ist in den Zeichnungen rein schematisch dargestellt und wird nachfolgend näher beschrieben. Es zeigt
- Figur 1: eine schematische Darstellung eines Prozesskreislaufs eines erfindungsgemäßen Wäschetrockners;
- Figur 2: ein schematisches Ablaufdiagramm eines erfindungsgemäßen Verfahrens; und
- Figur 3: den Umluftanteil der Prozessluft, die Luft-Temperatur der Prozessluft und die Restfeuchte der Prozessluft über der Zeit für eine Durchführung des erfindungsgemäßen Verfahrens des erfindungsgemäßen Wäschetrockners.

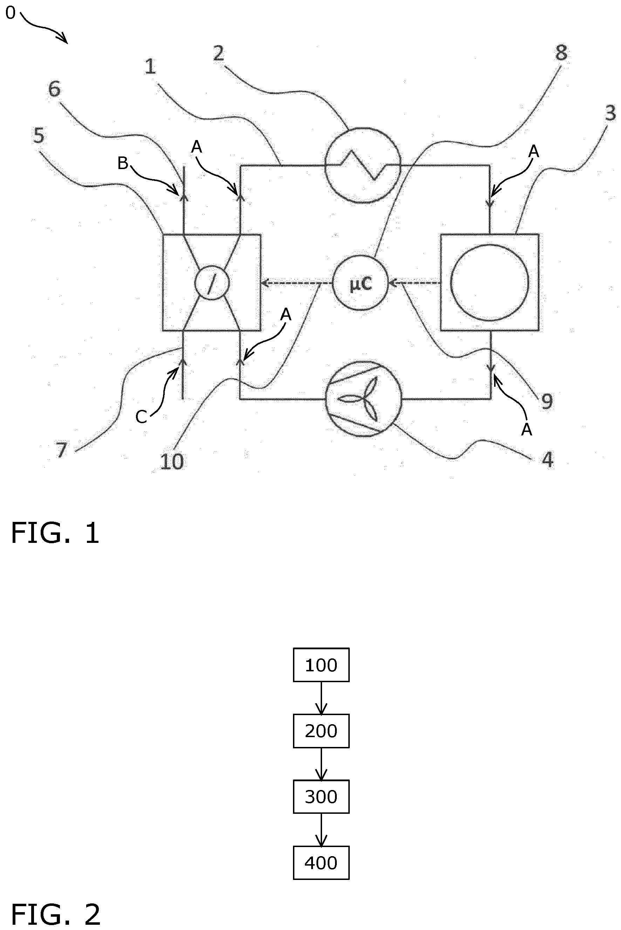

Figur 1 zeigt eine schematische Darstellung eines Prozesskreislaufs eines erfindungsgemäßen Wäschetrockners 0.

Der Wäschetrockner 0 weist einen Prozessluftkreislauf 1 auf, welcher die im Folgenden beschriebenen Elemente des Trockners 0 prozessluftführend als zumindest im Wesentlichen geschlossenen Kreislauf miteinander verbindet. Der Prozessluftkreis 1 weist hierzu vier Luftkanäle 1 auf, welche gemeinsam den Prozessluftkreislauf 1 bilden und auch als Luftwege 1 bezeichnet werden können. Zur Vereinfachung der Darstellung soll nicht näher zwischen dem Prozessluftkreislauf 1 und dessen vier Luftkanälen 1 bzw. Luftwegen 1 unterschieden werden. Innerhalb des Prozessluftkreislaufs 1 kann Prozessluft als Prozessluftstrom A im Kreis zirkulieren, wie weiter unten noch näher beschrieben werden wird.

Innerhalb des Prozessluftkreislaufs 1 bzw. zwischen zwei Luftkanälen 1 ist ein Heizelement 2 in Form einer Heizung 2 angeordnet, welche z.B. elektrisch betrieben werden kann. Wird das Heizelement 2 betrieben, kann die Prozessluft an dieser Stelle erwärmt werden. Somit weist die Prozessluft beim Verlassen bzw. nach dem Passieren des Heizelements 2 eine höhere Ist-Temperatur als zuvor auf.

Im weiteren Verlauf des Prozessluftkreislaufs 1 führt der entsprechende Luftkanal 1 die erwärmte Prozessluft in eine Trommel 3, in welcher zu trocknende Wäsche aufgenommen und rotiert werden kann. Durch die Wärme der Prozessluft kann die Feuchtigkeit aus der Wäsche ausgetrieben und von der Prozessluft aufgenommen sowie mitgeführt werden. Daher ist im Bereich der Trommel 3 ein Temperatursensor (nicht dargestellt) angeordnet, um die Ist-Temperatur der Prozessluft an dieser Stelle im Prozessluftkreislauf 1 messtechnisch erfassen zu können. Ein weiterer der Luftkanäle 1 führt die feuchte Prozessluft nun einem Gebläse 4 zu, welches den Strom A der Prozessluft erzeugt und somit die Prozessluft aus der Trommel 3 ansaugt.

Im weiteren Verlauf des Prozessluftkreislaufs 1 ist ein Mischluftelement 5 in Form einer Mischluftklappe 5 angeordnet, welcher die Prozessluft bzw. der Prozessluftstrom A von dem Gebläse 4 zugeführt wird. Je nach Einstellung des Mischluftelements 5 kann ein Anteil der Prozessluft als Abluft bzw. als Abluftstrom B durch einen Abluftpfad 6, welcher einen Auslass 6 für die Abluft an die Umgebung des Trockners 0 darstellt, aus dem Trockner 0 bzw. aus dessen Prozessluftkreislauf 1 heraus abgeführt werden, welcher konstruktiv zwischen 0% und 100% liegt und stufenlos seitens Mischluftelements 5 eingestellt werden kann. Ferner weist das Mischluftelement 5 einen Zuluftpfad 7 auf, welcher einen Einlass 7 für Umgebungsluft, Frischluft bzw. Zuluft bzw. für einen Umgebungsluftstrom C, einen Frischluftstrom C bzw. einen Zuluftstrom C aus der Umgebung des Trockners 0 darstellt. Über den Zuluftpfad 7 kann in demselben Maße Zuluft in den Trockner 0 bzw. in dessen Prozessluftkreislauf 1 eingeführt werden, wie über den Abluftpfad 6 im selben Moment abgeführt werden kann. Entsprechend kann auch der Anteil an Zuluft konstruktiv zwischen 0% und 100% liegen. Die Zuluft ergänzt die Umluft wieder zur Prozessluft.

Genauer gesagt wird die Prozessluft dem Mischluftelement 5 von dem Gebläse 4 zugeführt und dort in einen Anteil von Abluft und in einen Anteil von Umluft aufgeteilt, sofern der Abluftanteil nicht 0% oder 100% entspricht. Der Anteil der Prozessluft, welcher durch die Abfuhr der Abluft reduziert wurde, wird anschließend durch Umgebungsluft, Frischluft bzw. Zuluft wieder aufgefüllt, so dass die Umluft beim Austritt aus dem Mischluftelement 5 wieder auf das Maß der Prozessluft ergänzt werden kann, welche in das Mischluftelement 5 eingetreten ist. Durch einen weiteren Luftkanal 1 schließt sich dann der Prozessluftkreis 1 hin zum Heizelement 2.

Es ist ferner ein Regelungselement 8 vorgesehen, welches als elektronisches Regelungselement 8 ausgeführt ist. Das Regelungselement 8 ist signalübertragend mit dem Temperatursensor der Trommel 3 verbunden, so dass dem Regelungselement 8 ein Signal 9 der Ist-Temperatur von der Trommel 3 zugeführt werden kann. Diesen Wert einer aktuellen Ist-Temperatur der Prozessluft innerhalb der Trommel 3 kann das Regelungselement 8 mit einer Soll-Temperatur der Prozessluft vergleichen und hieraus eine Differenz bilden, welche einem PID-Regler des Regelungselements 8 zugeführt werden kann. Der PID-Regler kann hieraus einen Stellwert erzeugen, welcher dem Anteil der Abluft an der Prozessluft im Mischluftelement 5 entspricht und die Stellung des Mischluftelements 5 als Stellgröße entsprechend einstellen kann. Ein entsprechendes Signal 10 des Stellwerts kann vom Regelungselement 8 an das Mischluftelement 5 übertragen werden. Hierdurch kann insbesondere im Rahmen eines Prozesses zur Trocknung der Wäsche in der Trommel 3 ein Verlauf der Soll-Temperatur der Prozessluft vorgegeben werden, auf den die Ist-Temperatur der Prozessluft von dem Regelungselement 8 geregelt werden kann.

Figur 2 zeigt ein schematisches Ablaufdiagramm eines erfindungsgemäßen Verfahrens, welches seitens des Regelungselements 8 wie folgt ausgeführt werden kann:
Es erfolgt pro Zeitpunkt seitens des Regelungselements 8 ein Erhalten 100 einer Soll-Temperatur des Prozessluftstroms A z.B. von einer Steuerungseinheit des Trockners 0 (nicht dargestellt), welche insbesondere die Soll-Temperatur des Prozessluftstroms A zu diesem Zeitpunkt im Ablauf des Trocknungsprozesses ist. Ebenso erfolgt ein Erfassen 200 einer Ist-Temperatur des Prozessluftstroms A in der Trommel 3 seitens des Temperatursensors.

Seitens des Regelungselements 8 erfolgt nun ein Bestimmen 300 eines Stellwerts des Verhältnisses von Umluftstrom zu Abluftstrom B basierend auf der Soll-Temperatur und der Ist-Temperatur des Prozessluftstroms A. Dieser Stellwert wird an das Mischluftelement 5 übermittelt, so dass ein Betreiben 400 des Mischluftelements 5 basierend auf dem Stellwert erfolgen kann. Hieraus resultiert eine Stellung des Mischluftelements 5, welche den Prozessluftstrom A wie zuvor beschrieben in einen Anteil von Abluft und einen Anteil von Umluft aufteilt. Dies führt in gleichem Maße zur Zufuhr von Umgebungsluft, Frischluft bzw. Zuluft in die Umluft, welche hierdurch wieder vollständig zur Prozessluft aufgefüllt wird.

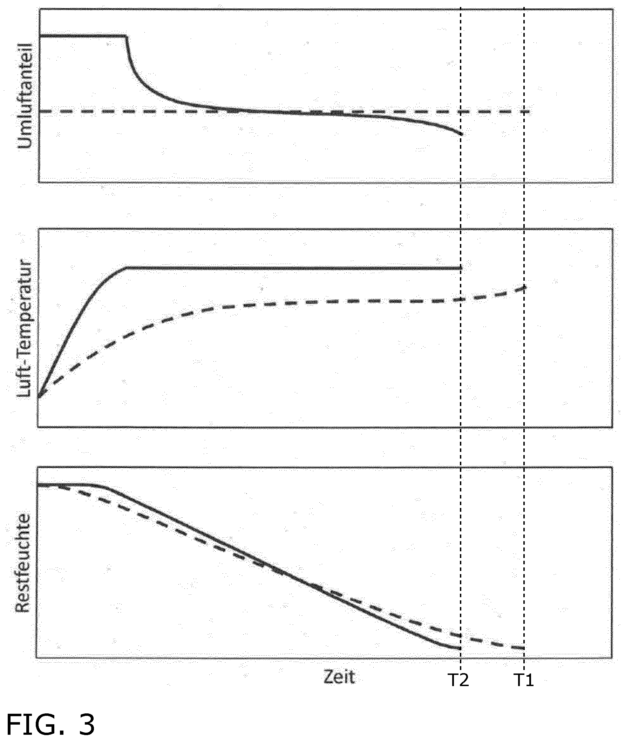

Figur 3 zeigt den Umluftanteil der Prozessluft, die Luft-Temperatur der Prozessluft und die Restfeuchte der Prozessluft über der Zeit für eine Durchführung des erfindungsgemäßen Verfahrens des erfindungsgemäßen Wäschetrockners 0.

In der oberen Abbildung der Figur 3 sind die Umluftanteile bei einem gewerblichen Wäschetrockner der Bezeichnung "Air-Recycling" gestrichelt sowie bei einem erfindungsgemäßen Trockner 0 durchgezogen in ihren zeitlichen Verläufen während eines Trockenprogramms dargestellt. Bei dem gewerblichen Wäschetrockner der Bezeichnung "Air-Recycling" werden die Luftmengen aufgrund der konstruktiven Ausgestaltung des Mischluftelements konstant im Verhältnis von ca. 60/40 geteilt und zwar über die gesamte Programmlaufzeit hinweg. Bei der dynamischen Regelung des erfindungsgemäßen Trockners 0 startet das System mit einem deutlich höheren Umluftanteil von z.B. 90%.

In der mittleren Abbildung der Figur 3 sind die Ist-Temperaturverläufe der Prozessluft dargestellt, die sich aufgrund eines statischen Umluftanteils bei dem gewerblichen Wäschetrockner der Bezeichnung "Air-Recycling" sowie eines dynamisch geregelten Umluftanteils des erfindungsgemäßen Trockners 0 bei durchgängig konstanter Heizleistung ergeben. Die durchgezogene Linie der erfindungsgemäßen dynamischen Regelung steigt dabei schneller an als die gestrichelte Linie der statischen Umluftaufteilung des gewerblichen Wäschetrockners der Bezeichnung "Air-Recycling". Die Ist-Temperatur der Prozessluft bei der erfindungsgemäßen dynamischen Regelung erreicht schneller einen vergleichsweise höheren Wert und bleibt anschließend konstant. Dieser Verlauf ist das Resultat des geregelten Umluftanteils, wobei die Umluftklappe des Mischluftelements 5 zu Beginn des Trockenvorgangs auf maximale Umluft gehalten wird.

Die erfindungsgemäße dynamische Regelung ist von Anfang an aktiv und gibt zu jedem Zeitpunkt den jeweils optimalen Umluftanteil der Prozessluft z.B. als Prozentwert aus, den das Mischluftelement 5 anzufahren hat, damit zum einen eine im Programmablauf des Trocknungsprozesses vorgegebene Soll-Temperatur der Prozessluft möglichst schnell erreicht wird, was im Vergleich zu dem gewerblichen Wäschetrockner der Bezeichnung "Air-Recycling" zu einem schnelleren Aufheizen und Abkühlen führt, und zum anderen eine im Programmablauf des Trocknungsprozesses vorgegebene Soll-Temperatur der Prozessluft gehalten wird.

Dabei fängt der Regler des Regelungselements 8 bei optimal eingestellten Regelparametern bereits vor dem Erreichen der Soll-Temperatur der Prozessluft an, einen geringeren Umluftanteil an das Mischluftelement 5 auszugeben, um ein Überschwingen der Ist-Temperatur der Prozessluft zu vermeiden. In der oberen Abbildung der Figur 3 ist entsprechend zu erkennen, dass der Umluftanteil anfänglich deutlich abnimmt, wodurch ein weiterer Temperaturanstieg der Ist-Temperatur der Prozessluft verhindert werden kann. Anschließend stellt der Regler des Regelungselements 8 durch eine fortlaufende Anpassung des Umluftanteils sicher, dass die vorgegebene Ist-Temperatur der Prozessluft konstant gehalten wird, siehe mittlere Abbildung der Figur 3.

Der Ablauf des Trocknungsprozesses, wie er in den drei Abbildungen der Figur 3 vergleichend dargestellt ist, läuft insgesamt derart ab, dass die Heizung 2 durchgehend mit 100%er Leistung betrieben wird, bis die Wäsche in der Trommel 3 trocken ist. Die Soll-Temperatur der Prozessluft wird währenddessen aufgrund der Regelung des Regelungselements 8 des Verhältnisses von Umluftstrom zu Abluftstrom B bzw. von Umluft zu Abluft möglichst schnell von der Ist-Temperatur der Prozessluft erreicht und anschließend gehalten. Hierzu startet der Trocknungsprozess mit einem hohen Umluftanteil zwischen z.B. 99% bis 90%, insbesondere von 95%, um die Aufheizzeit zu minimieren. Dies führt im Umkehrschluss zu einem Abluftanteil zwischen 1% und 10%, insbesondere von 5%. Vor dem Erreichen der Soll-Temperatur der Prozessluft fängt der Regler des Regelungselements 8 bereits an, den Umluftanteil zu reduzieren, damit die Soll-Temperatur der Prozessluft von der Ist-Temperatur möglichst ohne Überschwinger erreicht wird. Der Regler des Regelungselements 8 korrigiert dann den Umluftanteil stets auf einem optimalen Wert, damit die Ist-Temperatur der Prozessluft möglichst konstant auf der Soll-Temperatur der Prozessluft gehalten wird.

Zum Ende des Trocknungsprozesses schaltet die Heizung 2 ab und die Soll-Temperatur der Prozessluft wird auf z.B. 0°C gesetzt. Hierdurch ändert die Regelung des Regelungselements 8 den Umluftanteil auf 0%, d.h. auf volle Abluft und volle Zuluft, um den Trockner 0 möglichst schnell abzukühlen. Dabei wird der erfindungsgemäße Trocknungsprozess mit einer Gesamtlaufzeit T2 im Vergleich zu der Gesamtlaufzeit T1 des Trocknungsprozesses des Trockners mit der Bezeichnung "Air Recycling" schneller durchgeführt.

Die vom Regler des Regelungselements 8 vorgegebene Zielposition des Mischluftelements 5 bzw. dessen Regulierungselements wie z.B. einer Klappe ergibt sich bei Verwendung eines PID-Reglers zu jedem Zeitpunkt - vereinfacht dargestellt - aus drei Anteilen, nämlich aus der aktuellen Differenz zwischen Soll- und Ist-Temperatur der Prozessluft (P-Glied), aus der aufsummierten Differenzen zwischen Soll- und Ist-Temperatur der Prozessluft über den vergangenen Zeitraum (I-Glied) und aus der aktuellen Steigung der Differenz zwischen Soll- und Ist-Temperatur der Prozessluft (D-Glied). Alle drei Anteile ergeben in Summe den Stellwert, den der Regler des Regelungselements 8 an das Mischluftelement 5 als Klappensteuerung ausgibt.

Der Stellwert ändert sich kontinuierlich und hängt vom individuellen Verlauf der Ist-Temperatur der Prozessluft ab. Der Ist-Temperaturverlauf der Prozessluft hängt wiederum von Faktoren wie Wäscheart, Beladungsmenge, verfügbare Heizleistung, Gerätegröße, Ist-Temperatur der Zuluft, Gebläseleistung, thermische Verluste, Gegendruck in der Abluftleitung etc. ab. Diese Faktoren braucht der Regler des Regelungselements 8 nicht zu kennen, sondern der Regler des Regelungselements 8 verfolgt nur den Verlauf der Ist-Temperatur der Prozessluft und ermöglicht durch die Ausgabe des zu jedem Zeitpunkt optimalen Umluftanteils einen Trocknungsprozess, der effizienter sowie robuster gegen Schwankungen der oben genannten Einflussfaktoren ist. Aufgrund des dynamischen Charakters der Regelung des Regelungselements 8 werden keine vorab definierten Umluftanteile als Programmschritte im Ablauf des Trocknungsprozesses hinterlegt, sondern die Umluftanteile ergeben sich aus der jeweiligen Situation, wobei der Regler des Regelungselements 8 als Eingangsgröße die Ist-Temperatur der Prozessluft aufnimmt und als Ausgangsgröße den jeweils optimalen Umluftanteil bzw. eine entsprechende Einstellung des Mischluftelements 5 ausgibt.

### Bezugszeichenliste (Bestandteil der Beschreibung)

- A: Prozessluftstrom
- B: Abluftstrom
- C: Zuluftstrom; Umgebungsluftstrom; Frischluftstrom

- T1: Gesamtlaufzeit eines Trocknungsprozesses eines Trockners mit der Bezeichnung "Air Recycling"
- T2: Gesamtlaufzeit eines erfindungsgemäßen Trocknungsprozesses

- 0: Wäschetrockner
- 1: Luftkanals; Prozessluftkreislauf; Luftwege
- 2: Heizelement; Heizung
- 3: Trommel
- 4: Gebläse
- 5: Mischluftelement; Mischluftklappe
- 6: Abluftpfad; Auslass für Abluft an die Umgebung
- 7: Zuluftpfad; Einlass für Zuluft, Frischluft bzw. Umgebungsluft aus der Umgebung
- 8: (elektronisches) Regelungselement
- 9: Signal der Ist-Temperatur von Trommel 3 an Regelungselement 8
- 10: Signal des Stellwerts von Regelungselement 8 an Mischluftelement 5

- 100: Erhalten Soll-Temperatur des Prozessluftstroms A
- 200: Erfassen Ist-Temperatur des Prozessluftstroms A
- 300: Bestimmen Stellwert des Verhältnisses von Umluftstrom zu Abluftstrom B basierend auf Soll-Temperatur und Ist-Temperatur des Prozessluftstroms A
- 400: Betreiben des Mischluftelements 5 basierend auf Stellwert

## Patentansprüche

1. Wäschetrockner (0)
mit einem Gebläse (4), welches ausgebildet ist, einen Prozessluftstrom (A) innerhalb eines Luftkanals (1) zu erzeugen, und
mit einem Mischluftelement (5), welches ausgebildet ist,
den Prozessluftstrom (A) von dem Gebläse (4) zu erhalten und in einen Umluftstrom und in einen Abluftstrom (B) zu teilen,
den Abluftstrom (B) mittels eines Abluftpfads (6) an die Umgebung abzuführen und
dem Umluftstrom einen Zuluftstrom (C) mittels eines Zuluftpfads (7) aus der Umgebung zuzuführen,
wobei das Mischluftelement (5) ferner ausgebildet ist, das Verhältnis von Umluftstrom zu Abluftstrom (B) zu variieren,
**gekennzeichnet durch**
ein Regelungselement (8), welches ausgebildet ist, das Verhältnis von Umluftstrom zu Abluftstrom (B) mittels des Mischluftelements (5), vorzugsweise ausschließlich, in Abhängigkeit einer Soll-Temperatur des Prozessluftstroms (A) zu regeln.

2. Wäschetrockner (0) nach Anspruch 1, **dadurch gekennzeichnet, dass**
das Regelungselement (8) ausgebildet ist, das Verhältnis von Umluftstrom zu Abluftstrom (B) mittels des Mischluftelements (5), vorzugsweise ausschließlich, in Abhängigkeit eines Soll-Temperaturverlaufs des Prozessluftstroms (A) über die Zeit eines Prozesses zu regeln.

3. Wäschetrockner (0) nach Anspruch 1 oder 2, **dadurch gekennzeichnet, dass**
der Wäschetrockner (0), vorzugsweise das Regelungselement (8), ausgebildet ist, das Gebläse (4) mit konstanter Gebläseleistung, vorzugsweise mit maximaler Gebläseleistung, zu betreiben.

4. Wäschetrockner (0) nach einem der vorangehenden Ansprüche, **gekennzeichnet durch** ein Heizelement (2), welches ausgebildet und angeordnet ist, den Prozessluftstrom (A) zu erwärmen,
wobei das Wäschetrockner (0), vorzugsweise das Regelungselement (8), ausgebildet ist, das Heizelement (2) mit konstanter Heizleistung, vorzugsweise mit maximaler Heizleistung, zu betreiben.

5. Wäschetrockner (0) nach einem der vorangehenden Ansprüche, **dadurch gekennzeichnet, dass**
das Regelungselement (8) ausgebildet ist, das Mischluftelement (5) derart zu regeln, dass im Laufe eines Prozesses stets ein Abluftstrom (B) erzeugt wird.

6. Wäschetrockner (0) nach einem der vorangehenden Ansprüche, **dadurch gekennzeichnet, dass**
das Regelungselement (8) ausgebildet ist, das Mischluftelement (5) derart zu regeln, dass zu Beginn eines Prozesses ein minimaler Anteil des Abluftstroms (B) von 1% bis 15%, vorzugsweise von 5% bis 15%, gegenüber dem Anteil des Umluftstroms erzeugt wird.

7. Wäschetrockner (0) nach einem der vorangehenden Ansprüche, **dadurch gekennzeichnet, dass**
das Regelungselement (8) ausgebildet ist, das Mischluftelement (5) derart zu regeln, dass im Laufe eines Prozesses der Anteil des Abluftstroms (B) gegenüber dem Anteil des Umluftstroms konstant gehalten oder stetig erhöht wird.

8. Wäschetrockner (0) nach einem der vorangehenden Ansprüche, **dadurch gekennzeichnet, dass**
das Regelungselement (8) ausgebildet ist, das Mischluftelement (5) derart zu regeln, dass am Ende eines Prozesses ein maximaler Anteil des Abluftstroms (B) von 90% bis 100% gegenüber dem Anteil des Umluftstroms erzeugt wird.

9. Wäschetrockner (0) nach einem der vorangehenden Ansprüche, **dadurch gekennzeichnet, dass**
das Wäschetrockner (0), vorzugsweise das Regelungselement (8), ausgebildet ist, am Ende eines Prozesses ein Heizelement (2) des Prozessluftstroms (A) in der Heizleistung zu reduzieren oder auszuschalten.

10. Wäschetrockner (0) nach einem der vorangehenden Ansprüche, **dadurch gekennzeichnet, dass**
das Regelungselement (8) ausgebildet ist, das Mischluftelement (5) auf die maximal zulässige Temperatur eines Prozesses und/oder auf die maximal zulässige Temperatur eines Heizelements (2) des Prozessluftstroms (A) als Soll-Temperatur zu regeln.

11. Wäschetrockner (0) nach einem der vorangehenden Ansprüche, **dadurch gekennzeichnet, dass**
das Regelungselement (8) einen PI-Regler, vorzugsweise einen PID-Regler, aufweist.

12. Wäschetrockner (0) nach einem der vorangehenden Ansprüche, **gekennzeichnet durch**
einen Temperatursensor, welcher ausgebildet und angeordnet ist, die Ist-Temperatur des Prozessluftstroms (A) zu erfassen.

13. Wäschetrockner (0) nach Anspruch 12, **dadurch gekennzeichnet, dass**
der Temperatursensor in einem Luftzuführungskanal hinter einem Heizelement (2) oder in einer Trommel (3) angeordnet ist.

14. Regelungselement (8) zur Verwendung in einem Wäschetrockner (0) nach einem der vorangehenden Ansprüche,
welches ausgebildet ist, das Verhältnis von Umluftstrom zu Abluftstrom (B) mittels des Mischluftelements (5), vorzugsweise ausschließlich, in Abhängigkeit einer Soll-Temperatur des Prozessluftstroms (A) zu regeln.

15. Verfahren zum Betrieb eines Wäschetrockners (0), vorzugsweise eines Trockners (0), nach einem der Ansprüche 1 bis 13, mit wenigstens den Schritten:
Erhalten (100) einer Soll-Temperatur des Prozessluftstroms (A),
Erfassen (200) einer Ist-Temperatur des Prozessluftstroms (A), und
Bestimmen (300) eines Stellwerts des Verhältnisses von Umluftstrom zu Abluftstrom (B) basierend auf der Soll-Temperatur und der Ist-Temperatur des Prozessluftstroms (A), und
Betreiben (400) des Mischluftelements (5) basierend auf dem Stellwert.
